# EUROPÄISCHE PATENTSCHRIFT

(11) **EP 4 345 496 B1**
(45) Veröffentlichungstag und Bekanntmachung des Hinweises auf die Patenterteilung: **31.07.2024**
(21) Anmeldenummer: 23197184.7
(22) Anmeldetag: 13.09.2023
(51) Int. Cl.: G01S 7/4863, G01S 7/497, G01S 17/931, G01S 7/481

(54) **LIDAR-EMPFÄNGER-SCHALTUNG ZUM EMPFANGEN VON OPTISCHEN SIGNALEN MITTELS FOTODETEKTOREN**
LIDAR RECEIVER CIRCUIT FOR RECEIVING OPTICAL SIGNALS BY MEANS OF PHOTODETECTORS
CIRCUIT RÉCEPTEUR LIDAR POUR LA RÉCEPTION DE SIGNAUX OPTIQUES À L'AIDE DE PHOTODÉTECTEURS

(30) Priorität: 27.09.2022 DE 102022124775
(43) Veröffentlichungstag der Anmeldung: 03.04.2024
(73) Patentinhaber: Elmos Semiconductor SE, 44227 Dortmund (DE)
(72) Erfinder: Finkeldey, Fabian, 76646 Bruchsal (DE); Srowig, André, 69115 Heidelberg (DE)
(74) Vertreter: Durm Patentanwälte PartG mbB

(56) Entgegenhaltungen:
- WO-A1-2022/122891
- DE-A1- 102014 226 978
- DE-A1- 102020 101 451

## Beschreibung

Die vorliegende Erfindung betrifft eine Lidar-Empfänger-Schaltung zum Empfangen von optischen Signalen mittels Fotodetektoren, um Ereignisse oder Objekte in der Umgebung der Lidar-Empfänger-Schaltung zu erfassen. Die Lidar-Empfänger-Schaltung weist eine Redundanz an Empfänger-Schaltungen zur Reduzierung der Ausfallwahrscheinlichkeit auf. Sie umfasst ein Fotodetektor-Array mit einer Vielzahl von Fotodetektoren zum Empfangen optischer Signale und zum Ausgeben eines Messsignals. Die Fotodetektoren sind als zweidimensionale Matrix in Form von Zeilen und Spalten angeordnet.

Lidar-Empfänger-Schaltungen und Lidar-Sensoren (Lidar: Light detection and ranging) sind eine Art von optischen Sensoren, die in vielen Anwendungsfällen eingesetzt werden, um die Umgebung des Sensors zu erfassen und schließlich auszuwerten. Beispielsweise finden in Fahrzeugen Lidar-Sensoren Anwendung, um die Umgebung des Fahrzeugs zu erfassen und eine entsprechende Regelung von Komponenten des Fahrzeugs vorzunehmen. Beispielsweise können Lidar-Sensoren eingesetzt werden, wenn eine Abstandsmessung zu vorausfahrenden Fahrzeugen erfolgen soll. Einsatz finden derartige Sensoren auch bei einem autonomen oder teilautonomen Fahren von Fahrzeugen, bei dem ein selbstständiges und automatisches Abbremsen, Lenken und Beschleunigen eines Fahrzeugs möglich ist. Hierbei muss der Umgebungsbereich direkt vor dem Fahrzeug, aber auch in seitlichen Bereichen um das Fahrzeug herum detektiert werden. Eingesetzt werden hierbei häufig Verfahren zur direkten Laufzeitmessung, bei denen einzelne Ereignisse detektiert werden. Mittels einer Histogrammierung kann dann aus den einzelnen Ereignissen ein Bild darüber geformt werden, wie die Umgebung des Fahrzeugs aussieht und ob sich Objekte in der Nähe des Fahrzeugs befinden. Ein Beispiel für ein Laufzeit-Lichtdetektionssystem ist aus der DE 10 2020 101 451 A1 bekannt. Die DE 10 2014 226 978 A1 betrifft ein Laserradarsystem für eine Objekterkennung und Abstandsmessung.

Lidar-Empfänger-Schaltungen und Lidar-Sensoren umfassen in der Regel eine Vielzahl von Fotodetektoren oder Fotodioden, die in Form einer Matrix angeordnet sind. Typischerweise werden im Automobilbereich Arrays verwendet, die mehr als 160 x 50 Fotodetektoren oder Sensoren aufweisen. Die Lidar-Sensoren umfassen zudem einen Speicher mit einer Vielzahl von Transistoren. Bei Lidar-Sensoren mit ca. 260 x 80 Pixeln bzw. Fotodetektoren beläuft sich die Anzahl auf ca. 5,6 Millionen Transistoren.

Trotz sorgfältiger Produktion unter besten Bedingungen und im Reinraum kommt es bei der Herstellung zum Ausfall einzelner Transistoren, die die Funktionsfähigkeit der Lidar-Sensoren einschränken oder den gesamten Sensor zu Ausschuss werden lassen. Daher ist bei der Implementierung des Speichers ohne Redundanz eine hohe Wahrscheinlichkeit für Ausbeuteverluste gegeben, also für den Ausfall einzelner Transistoren, die den Sensor zu Ausschuss machen. Die DE 10 2020 101451 A1 und die WO 2022/122891 A1 betreffen deshalb Vorrichtungen zum Überwachen der Empfängersignalpfade.

Trotz der fortschreitenden Entwicklung bei Lidar-Sensoren besteht nach wie vor ein hoher Bedarf in der Verbesserung dieser Sensoren, insbesondere im Hinblick auf eine Reduktion der Ausfallwahrscheinlichkeit bei der Herstellung und im Hinblick auf die Ausbeuteverluste.

Gelöst wird die gestellte Aufgabe mit einer Lidar-Empfänger-Schaltung zum Empfangen von optischen Signalen mittels Fotodetektoren mit den Merkmalen des Anspruchs 1, durch ein Lidar-Empfänger-System mit den Merkmalen des Anspruchs 14 und durch ein Verfahren mit den Merkmalen des Anspruchs 16.

Im Rahmen der Erfindung wurde festgestellt, dass die Erhöhung der Redundanz generell ein probates Mittel ist, um die Ausbeuteverluste zu reduzieren. Allerdings führt die Redundanz von Transistoren oder Speichereinheiten zu dem Problem, das die extrem stark parallelisierte Struktur dann unterschiedlich lange Leitungen zwischen den Bauteilen aufweist und Laufzeitunterschiede hervorgerufen werden, die eine Verwendung der Schaltungen unmöglich machen oder die Verarbeitungsgeschwindigkeit derart heruntersetzen, dass ein praktischer Einsatz ausgeschlossen ist.

In einem Aspekt betrifft die vorliegende Erfindung eine Lidar-Empfänger-Schaltung zum Empfangen von optischen Signalen mit Fotodetektoren, um Ereignisse und Objekte in der Umgebung der Lidar-Schaltung zu erfassen. Die Lidar-Empfänger-Schaltung hat eine Redundanz an Empfänger-Schaltungen zur Reduzierung der Ausfallwahrscheinlichkeit. Sie umfasst ein Fotodetektor-Array mit einer Vielzahl von Fotodetektoren zum Empfangen optischer Signale und zum Ausgeben eines Messsignals. Die Fotodetektoren sind als zweidimensionale Matrix in Form von Zeilen und n Spalten angeordnet, wobei die Anzahl von Spalten n > 1 ist, die Matrix also wenigstens zwei Spalten aufweist.

Die Lidar-Empfänger-Schaltung umfasst eine Vielzahl von i Empfänger-Schaltungen zum Empfangen des Messsignals der Fotodetektoren, wobei die Anzahl i > n ist. Die Schaltung hat eine Vielzahl von m Multiplexern, die elektrisch zwischen dem Fotodetektor-Array und den Empfänger-Schaltungen angeordnet sind und mit Fotodetektoren und Empfänger-Schaltungen verbunden sind. Die Anzahl m ist dabei größer als 1; vorzugsweise ist m = n.

Wenigstens einer der Multiplexer ist mit einer Spalte von Fotodetektoren und mit wenigstens zwei Empfänger-Schaltungen verbunden. Jede Empfängerschaltung ist dazu ausgebildet, die Messsignale der Fotodetektoren einer Spalte zu empfangen und zu verarbeiten. Jeder Empfänger-Schaltung ist dabei standardmäßig eine Spalte von Fotodetektoren zugeordnet. Die Multiplexer sind derart eingerichtet, um eine Spalte von Fotodetektoren mit einer anderen Empfänger-Schaltung zu verbinden als mit der Empfänger-Schaltung, die standardmäßig in der Spalte von Fotodetektoren zugeordnet ist.

Die Multiplexer können also durch entsprechende Verschaltung eine Spalte von Fotodetektoren zwei unterschiedlichen, bevorzugt benachbarten, Empfänger-Schaltungen zuordnen und die Spalte von Fotodetektoren mit einer der zugeordneten Empfänger-Schaltungen verbinden. Beim Ausfall einer Empfänger-Schaltung, was in der Produktion anhand eines Messverfahrens und standardmäßig ablaufenden Messprogramms ermittelt werden kann, kann ein Multiplexer also so geschaltet werden, dass die standardmäßig für den defekten Empfänger vorgesehene Spalte von Fotodetektoren an eine benachbarte Empfänger-Schaltung verschaltet wird. Durch die matrixförmige Anordnung der Fotodetektoren und die parallelisierte Anordnung der Empfänger-Schaltungen ändern sich die Leitungswege bei der Umschaltung eines Multiplexers von einer Empfängerschaltung zu einer benachbarten Empfänger-Schaltung nur sehr gering bis gar nicht. Folglich kommt es zu keiner oder einer in der Praxis vernachlässigbaren Änderung der Laufzeit. Bei einer Laufzeitmessung treten also durch den Ausfall einer anderen Empfängerschaltung und die Beschaltung einer anderen Empfänger-Schaltung durch einen Multiplexer keine Verfälschungen auf.

Die Wege zu redundanten Empfänger-Schaltungen, die beispielsweise SRAM-Blöcke sein können, und deren ebenfalls redundanten Ansteuerungsblöcke mit asynchronischen Zeitstempel-Latches können daher so kurz wie möglich gehalten werden. Insbesondere können die nominellen Verbindungen zwischen einer Spalte von Fotodetektoren zu Multiplexern und von Multiplexern zu den mit den Multiplexern verbundenen Empfänger-Schaltungen für alle Kanäle in einem Layout einer Lidar-Empfänger-Schaltung gleich ausgelegt sein. Auf diese Weise folgt auch beim Ausfall einer anderen Verbindung zu einer benachbarten Empfänger-Schaltung oder beim Umschalten im Multiplexer keine Änderung der Laufzeit.

In einem weiteren Aspekt betrifft die Erfindung ein Lidar-Empfänger-System mit einer Lidar-Empfänger-Schaltung, wie sie hier beschrieben ist, und mit einer Testschaltung. Die Testschaltung ist dazu ausgebildet, alle Empfänger-Schaltungen anzusprechen und einen vorbestimmten Test auszuführen, um einen Defekt einer Empfänger-Schaltung zu erkennen.

Auf Basis des Erkennens eines Defekts der Empfänger-Schaltung kann der verbundene Multiplexer so gesteuert werden, dass er die Verbindung zu der benachbarten, ebenfalls mit dem Multiplexer verbundenen Empfänger-Schaltung aktiviert und Signale von der dem Multiplexer zugeordneten Spalte von Fotodetektoren an die andere, nicht defekte Empfänger-Schaltung leitet.

In einem weiteren Aspekt betrifft die Erfindung eine Lidar-Empfänger-Schaltung, wie gerade beschrieben, die zudem eine Lichtquelle zum Aussenden von optischer Strahlung im sichtbaren oder nicht sichtbaren Bereich umfasst, welche von den Fotodetektoren detektiert werden kann. Das Lidar-Empfänger-System ist derart ausgebildet, dass die ausgesandte, optische Strahlung, die von einem Objekt in der Umgebung oder Nähe des Lidar-Empfänger-Systems reflektiert wird, von wenigstens einem der Fotodetektoren des Fotodetektor-Arrays detektiert und in wenigstens einer der Empfänger-Schaltungen verarbeitet wird.

Weitere Aspekte der Erfindung betreffen ein entsprechendes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Gemäß einem weiteren Aspekt betrifft die Erfindung einen Lidar-Empfänger mit der hier beschriebenen, in den Ansprüchen definierten Lidar-Empfänger-Schaltung oder ein Lidar-System.

Ein anderer Aspekt der Erfindung betrifft ein Fahrzeug mit einem Lidar-System oder Lidar-Empfänger-System mit einer Lidar-Empfänger-Schaltung, wie in den Ansprüchen definiert und hier beschrieben.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

In einer bevorzugten Ausgestaltung der Lidar-Empfänger-Schaltung sind die Empfänger-Schaltungen unabhängig voneinander. Jede der Empfänger-Schaltungen arbeitet für sich alleine und wird durch benachbarte Schaltungen nicht beeinflusst.

In einer bevorzugten Ausführungsform erfolgt in den unabhängigen Empfänger-Schaltungen eine asynchrone Verarbeitung der Messsignale. Somit sind die Empfänger-Schaltungen nicht von einem gemeinsamen Taktsignal abhängig. Jede Empfänger-Schaltung arbeitet dann, sobald ein Messsignal an der Empfänger-Schaltung anliegt. Eine Synchronisierung mittels eines Systemtakts ist nicht notwendig.

Eine bevorzuge Ausgestaltung der Lidar-Empfänger-Schaltung sieht vor, dass einer der Multiplexer eine Spalte von Fotodetektoren mit einer anderen, als der standardmäßig zugeordneten Empfänger-Schaltung verbindet, wenn bereits eine Verbindung der standardmäßig zugeordneten Empfänger-Schaltung mit einer anderen Spalte von Fotodetektoren existiert. Durch die Verwendung mehrerer Multiplexer, die mit wenigstens zwei, bevorzugt drei oder vier, bevorzugt benachbarten Empfänger-Schaltungen verbunden sind, ergibt sich, dass eine Empfänger-Schaltung mit zwei bzw. drei bzw. vier Multiplexern in Verbindung steht. Beim Ausfall einer Empfänger-Schaltung erfolgt durch die Multiplexer eine Zuordnung derart, dass eine aktive Verbindung, mittels der Messsignale zwischen dem Multiplexer und der Empfänger-Schaltung übermittelt werden können, durch eine neue, aktive Verbindung ersetzt wird. Beim Ausfall einer Empfänger-Schaltung kann folglich die Notwendigkeit bestehen, dass mehrere Multiplexer die bereits bestehenden Verbindungen zu einer Empfänger-Schaltung neu aktivieren bzw. aktive Verbindungen so umschalten müssen, dass neue Verbindungen hergestellt werden. Dies kann notwendig sein, um sicherzustellen, dass jeder Empfänger-Schaltung lediglich eine Spalte von Fotodetektoren zugeordnet ist und jede Empfänger-Schaltung nur die Messsignale einer Spalte von Fotodetektoren verarbeitet. Eine 1 :1-Zuordnung von Multiplexern zu Empfänger-Schaltungen bleibt auch beim Ausfall einer Empfänger-Schaltung erhalten.

Eine bevorzugte Ausführungsform der Lidar-Empfänger-Schaltung ist derart ausgebildet, dass beim Erkennen eines Defekts einer der Empfänger-Schaltungen der zugehörige Multiplexer die zugehörige Spalte von Fotodetektoren mit einer anderen Empfänger-Schaltung verbindet. Vorzugsweise erfolgt die Verbindung des Multiplexers mit einer Empfänger-Schaltung, zu der noch keine Verbindung mit einer Spalte mit Fotodetektoren besteht. Anderenfalls muss auch für die neu ausgewählte Empfänger-Schaltung mittels eines anderen Multiplexers eine neue Zuordnung erfolgen.

In einer bevorzugten Ausführungsform der Empfänger-Schaltung wird beim Erkennen eines (ersten) Defekts der q-ten Empfänger-Schaltung der zugehörige q-te Multiplexer die q-te Spalte von Fotodetektoren mit der um 1 erniedrigten (q-1-ten) Empfänger-Schaltung verbinden. Alle ersten bis q-1-ten Multiplexer ändern nach dem gleichen Prinzip die Zuordnung zwischen der Spalte von Fotodetektoren und der Empfänger-Schaltung. Bevorzugt erfolgt dieses Vorgehen für alle q kleiner oder gleich m/2. Dabei sind q und m natürliche Zahlen; m = Anzahl der Multiplexer.

Dieses Umschalten der Multiplexer erfolgt also bevorzugt für die erste Hälfte der Multiplexer bzw. Empfänger-Schaltungen in einer Reihe von Empfänger-Schaltungen.

Dieses Verschalten erfolgt also bevorzugt, wenn ein Defekt in der ersten Hälfte der Empfänger-Schaltungen detektiert wird.

Mit anderen Worten: Beim Erkennen eines Defekts einer q-ten Empfänger-Schaltung verbindet der zugehörige q-te Multiplexer die q-te Spalte von Fotodetektoren mit der um 1 erniedrigten Empfänger-Schaltung und alle, bevorzugt in einer festen Reihenfolge angeordneten 1 bis q-1-ten Multiplexer, die um 1 erniedrigte r-te Empfänger-Schaltung mit der r+1-ten Spalte von Fotodetektoren. Die Zuordnung zwischen Spalte und Empfänger-Schaltung wird nach dem gleichen Prinzip geändert oder hergestellt. Hierbei ist r eine natürliche Zahl. Es erfolgt also eine Zuordnung der nächst niedrigeren Empfänger-Schaltung mit der um 1 erhöhten Spalte von Fotodetektoren.

Wird ein weiterer Defekt einer Empfänger-Schaltung erkannt, beispielsweise der Defekt einer q-ten Empfänger-Schaltung, so schaltet der zugehörige q-te Multiplexer die q-te Spalte von Fotodetektoren mit der um 1 erhöhten Empfänger-Schaltung (q+1) und verbindet diese. Gleiches erfolgt mit allen, bevorzugt in einer festen Reihenfolge angeordneten q+1-ten bis m-ten Multiplexern, die die um 1 erhöhte r-te Empfänger-Schaltung mit der r-1-ten Spalte von Fotodetektoren verbinden. Die Zuordnung zwischen Spalte und Empfänger-Schaltung erfolgt nach dem gleichen Prinzip und eine Verbindung wird so hergestellt, dass dies bevorzugt für alle q größer oder gleich m/2 gilt, wobei q und r sowie m eine natürliche Zahl sind und m die Gesamtanzahl an Multiplexern darstellt.

Besonders bevorzugt ist in der Lidar-Empfänger-Schaltung die Anzahl i der Empfänger-Schaltungen größer als die Anzahl m der Multiplexer. Bevorzugt ist i größer oder gleich m+2, das heißt die Anzahl der Empfänger ist um 2 oder mehr größer als die Anzahl der Multiplexer. Besonders bevorzugt ist i größer oder gleich m+3, die Anzahl der Empfänger-Schaltungen also wenigstens um 3 größer als die Anzahl der Multiplexer. Somit ist eine Redundanz derart gegeben, dass zwei zusätzliche Empfänger-Schaltungen bzw. drei zusätzliche Empfänger-Schaltungen in der Lidar-Empfänger-Schaltung vorgesehen sind und zwei bzw. drei Empfänger-Schaltungen defekt sein können, ohne dass die Lidar-Empfänger-Schaltung ausgemustert werden muss.

In einer bevorzugten Ausführungsform sind die in der Lidar-Empfänger-Schaltung verwendeten Multiplexer bzw. wenigstens einer der Multiplexer ein 1:x-Multiplexer. Eine Spalte von Fotodetektoren kann dann mittels des Multiplexers mit x Empfänger-Schaltungen verbunden werden. Dabei ist x - 1 gleich der Differenz der Anzahl i von Empfänger-Schaltungen zu der Anzahl n von Spalten von Fotodetektoren. Bevorzugt ist x = 3, besonders bevorzugt ist x = 5.

In einer bevorzugten Ausführungsform der Lidar-Empfänger-Schaltung ist die Anzahl m der Multiplexer gleich der Anzahl n in der Spalte der Fotodetektoren. Jeder Spalte von Fotodetektoren ist demnach ein Multiplexer zugeordnet.

Eine besondere Ausführungsform der Lidar-Empfänger-Schaltung sieht vor, dass die Empfänger-Schaltung eine TDC-Schaltung ist, also eine Time-to-digital-Conversion-Schaltung.

Bevorzugt umfasst die Empfänger-Schaltung der Lidar-Empfänger-Schaltung eine Speichereinheit, die besonders bevorzugt einen SRAM-Speicher aufweist. Ebenso bevorzugt umfasst die Empfänger-Schaltung einen Histogrammspeicher, um optische Ereignisse zu histogrammieren und aus der Anzahl der auftretenden, optischen Ereignisse einen Rückschluss auf Objekte in der Nähe der Lidar-Empfänger-Schaltung machen zu können.

Eine bevorzugte Ausführungsform der Lidar-Empfänger-Schaltung sieht vor, dass der Fotodetektor eine Fotodiode, bevorzugt eine Avalanche-Diode umfasst. In einer sehr bevorzugten Ausführungsform umfasst ein Fotodetektor eine Single Photon Avalanche Diode (SPAD). Die Fotodetektoren umfassen zudem eine Ausleseschaltung.

Gemäß einer bevorzugten Ausführungsform der Lidar-Empfänger-Schaltung umfasst sie ein Schieberegister, wobei in dem Schieberegister die Einstellungen der Multiplexer gespeichert sind. Bevorzugt ist in dem Schieberegister die standardmäßige Zuordnung einer Spalte von Fotodetektoren zu einer Empfänger-Schaltung gespeichert, besonders bevorzugt zusätzlich oder alternativ die aktuelle Zuordnung von Spalten von Fotodetektoren zu Empfänger-Schaltungen.

Das erfindungsgemäße Verfahren zum Bypassen einer defekten Empfänger-Schaltung einer Lidar-Empfänger-Schaltung, die zum Empfangen von optischen Signalen mittels Fotodetektoren und zum Erkennen von Objekten in der Umgebung der Schaltung ausgebildet ist, umfasst die folgenden Schritte: In einem ersten Schritt erfolgt das Herstellen einer standardmäßigen Zuordnung von n Spalten von Fotodetektoren zu den i - x Empfänger-Schaltungen der m Multiplexer. Dabei gilt, m = i - n. Mit anderen Worten ist die Anzahl der Empfänger-Schaltungen i um x größer als die Anzahl der Spalten von Fotodetektoren. Durch diesen Schritt wird aber nur so vielen Empfänger-Schaltungen eine Spalte von Fotodetektoren zugeordnet, wie es Spalten von Fotodetektoren gibt. Die redundanten Empfänger-Schaltungen erfahren keine Zuordnung. Dennoch sind auch die redundanten Empfänger-Schaltungen, wie alle anderen Empfänger-Schaltungen, mit wenigstens einem Multiplexer verbunden.

In einem weiteren Schritt erfolgt das Erkennen eines Defekts einer q-ten Empfänger-Schaltung.

In einem Schritt der Zuordnung wird die aktuelle q-te Spalte von Fotodetektoren einer anderen Empfänger-Schaltung mittels des q-ten Multiplexers zugeordnet. Die standardmäßige Zuordnung von Spalten von Fotodetektoren zu Empfänger-Schaltung wird also aufgelöst und eine neue Zuordnung mittels des entsprechenden (zugeordneten) Multiplexers durchgeführt. Dies erfolgt bei einem Defekt einer ersten Empfänger-Schaltung, wobei hier die erste bis q-te Spalte von Fotodetektoren der jeweils vorherigen, also q-1-ten Empfänger-Schaltung zugeordnet wird.

In einer bevorzugten Ausführungsform des Verfahrens wird bei einem weiteren Defekt einer anderen Empfänger-Schaltung die q-te bis n-te Spalte von Fotodetektoren der jeweils nachfolgenden (q+1-ten) Empfänger-Schaltung zugeordnet.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine erfindungsgemäße Lidar-Empfänger-Schaltung mit einem Fotodetektor-Array;
- Figur 2: das Fotodetektor-Array aus Figur 1 im Detail;
- Figur 3: eine Prinzipskizze eines Lidar-Empfänger-Systems mit einer Lidar-Empfänger-Schaltung gemäß Figur 1;
- Figur 4: eine weitere Ausführungsform einer Lidar-Empfänger-Schaltung;
- Figur 5: eine Prinzipskizze eines Fahrzeugs mit einer erfindungsgemäßen Lidar-Empfänger-Schaltung;
- Figur 6: ein prinzipielles Ablaufschema eines Verfahrens zum Bypassen einer defekten Empfänger-Schaltung einer Lidar-Empfänger-Schaltung gemäß Figur 1

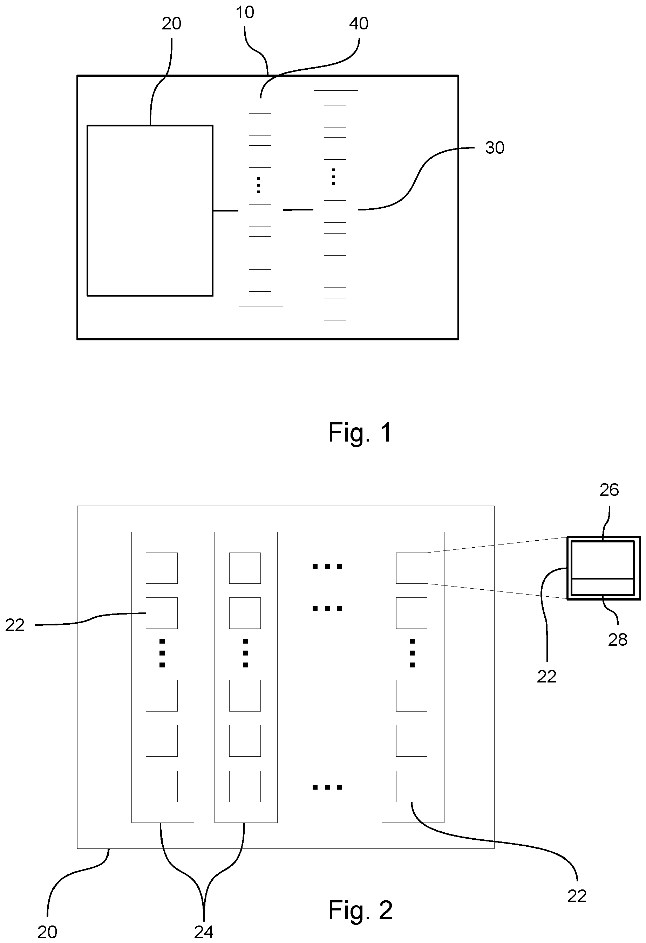

Die Figuren zeigen eine Lidar-Empfänger-Schaltung 10 in unterschiedlichen Ausführungsformen. Die erfindungsgemäße Lidar-Empfänger-Schaltung 10 gemäß Figur 1 umfasst ein Fotodetektor-Array 20 mit einer Vielzahl von Fotodetektoren 22, eine Mehrzahl von Empfänger-Schaltungen 30 sowie zwischen Fotodetektor-Array 20 und Empfänger-Schaltungen 30 zwischengeschaltete Mehrzahl von Multiplexern 40, die jeweils eine Verbindung zwischen dem Fotodetektor-Array 20 und den Empfänger-Schaltungen 30 herstellen.

In Figur 2 ist das Fotodetektor-Array 20 im Detail gezeigt. Es umfasst eine Vielzahl von Fotodetektoren 22 zum Empfangen optischer Signale und zum Ausgeben eines Messsignals. Die Fotodetektoren 22 sind als zweidimensionale Matrix angeordnet. Hierbei sind sie in Zeilen und n Spalten 24 in dem Fotodetektor-Array 20 angeordnet. Es sind wenigstens zwei Spalten 24 von jeweils mehr als einem Fotodetektor 22 vorhanden. Bevorzugte Ausführungsformen sehen mehr als 100 Spalten 24 von Fotodetektoren 22 vor, bevorzugt mehr als 150, weiter bevorzugt mehr als 200, sehr bevorzugt mehr als 250. Eine bevorzugte Ausführungsform eines Fotodetektor-Arrays 20 für eine Lidar-Schaltung hat beispielsweise 256 oder 258 Spalten 24 von Fotodetektoren 22. Jede Spalte 24 umfasst bevorzugt mehr als 10, sehr bevorzugt mehr als 50, besonders bevorzugt 80 Fotodetektoren 22. Hierdurch lässt sich ein Fotodetektor-Array 20 aufbauen, das eine Vielzahl von Signalen aufnehmen und verarbeiten kann.

Gemäß einer besonderen Ausführungsform, wie in Figur 2 gezeigt, kann ein Fotodetektor 22 beispielsweise eine Fotodiode 26 umfassen, die bevorzugt eine Avalanche-Diode und besonders bevorzugt eine Single Photon Avalanche Diode (SPAD) ist. Weiterhin kann der Fotodetektor 22 eine Ausleseschaltung 28 umfassen, um das mit der Fotodiode 26 aufgenommene Lichtsignal in ein elektrisches Messignal zu wandeln. Andere Ausführungen von Fotodetektoren 22 sind denkbar.

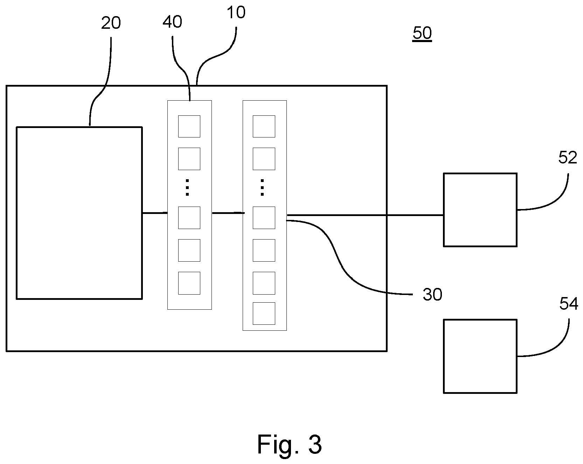

Figur 3 zeigt ein Lidar-Empfänger-System 50 mit einer Lidar-Empfänger-Schaltung 10 sowie einer Testschaltung 52, die dazu ausgebildet ist, die Empfänger-schaltungen 30 der Lidar-Empfänger-Schaltung 10 anzusprechen und einen vorbestimmten oder vorgegebenen Test auszuführen, um einen Defekt einer Empfänger-Schaltung 30 zu erkennen.

In Figur 3 ist eine besondere Ausführungsform des Lidar-Empfänger-Systems 50 gezeigt, dass weiterhin eine Lichtquelle 54 umfasst, die bevorzugt elektromagnetische oder optische Signale oder Lichtsignale im sichtbaren oder nicht sichtbaren Bereich ausstrahlt. Vorzugsweise ist die Lichtquelle 54 eine Laserlichtquelle oder eine Infrarotlichtquelle.

Die vorzugsweise optische Strahlung der Lichtquelle 54 wird von dem System ausgestrahlt und an einem Objekt in der Nähe oder in der Umgebung des Lidar-Empfänger-Systems 50 reflektiert. Die reflektierte Strahlung wird von wenigstens einem der Fotodetektoren 22 der Lidar-Empfänger-Schaltung 10 empfangen und detektiert und in wenigstens einer der Empfänger-Schaltungen 30 verarbeitet.

Die erfindungsgemäße Lidar-Empfänger-Schaltung 10 ist derart aufgebaut, dass sie eine Redundanz an Empfänger-Schaltungen 30 aufweist, um die Ausfallwahrscheinlichkeit von Empfänger-Schaltungen 30 insgesamt zu reduzieren. Dabei ist die Anzahl der Empfänger-Schaltungen 30 größer als die Anzahl von Spalten 24 von Fotodetektoren 22 in dem Fotodetektor-Array 20 der Lidar-Empfänger-Schaltung 10. Vorzugsweise ist die Anzahl i von Empfänger-Schaltungen 30 um wenigstens zwei, besonders bevorzugt um wenigstens vier größer als die Anzahl von Spalten 24 von Fotodetektoren 22.

Die Anzahl der Multiplexer 40 m, die elektrisch zwischen dem Fotodetektor-Array 20 und den Empfänger-Schaltungen 30 angeordnet sind und mit den Spalten 24 des Fotodetektor-Arrays 20 und den Empfänger-Schaltungen 30 verbunden sind, ist größer als 1. Vorzugsweise ist die Anzahl m von Multiplexern 40 genauso groß wie die Anzahl n von Spalten 24 von Fotodetektoren 22.

Die Lidar-Empfänger-Schaltung 10 ist derart aufgebaut, dass ein Multiplexer 40 mit wenigstens zwei, bevorzugt mit wenigsten drei Empfänger-Schaltungen 30 verbunden ist und jeweils eine der Empfänger-Schaltungen 30 ansprechen kann. "Ansprechen" in diesem Sinne bedeutet, dass eine elektrische Verbindung aktiviert wird, sodass ein elektrisches Signal von einer Spalte 24 von Fotodetektoren 22 an eine Empfänger-Schaltung 30 übermittelt wird.

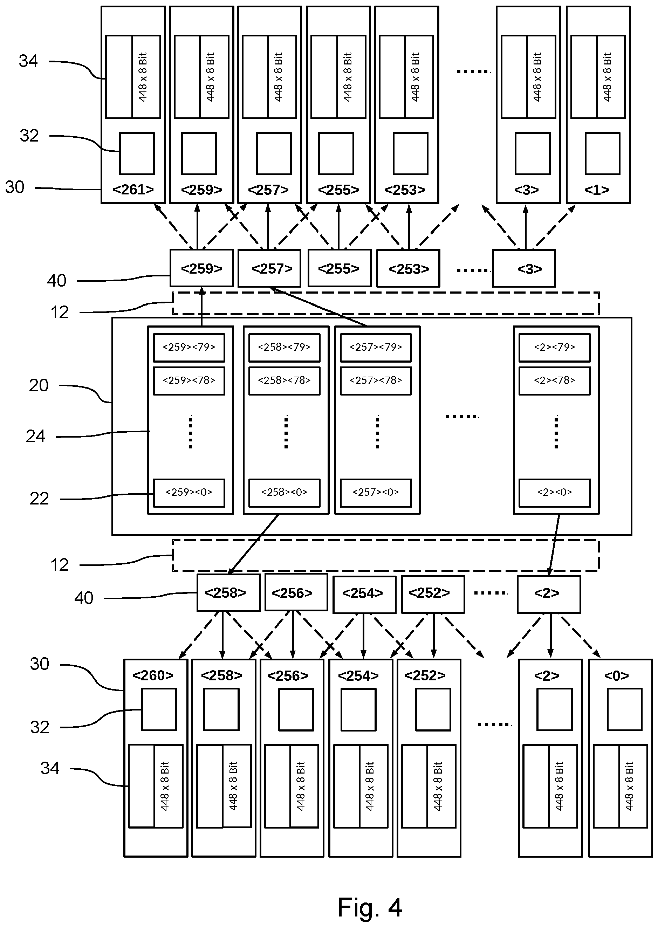

Figur 4 zeigt eine Ausführungsform einer Lidar-Empfänger-Schaltung 10, bei der das Fotodetektor-Array 20 in der Mitte der Schaltung angeordnet ist. Am oberen Rand und am unteren Rand sind jeweils die Empfänger-Schaltungen 30 und die Multiplexer 40 angeordnet. Dabei wird die Gesamtzahl an Empfänger-Schaltungen 30 und Multiplexern 40 halbiert, sodass eine Hälfte von Empfänger-Schaltung 30 und Multiplexern 40 oberhalb des Fotodetektor-Arrays 20 und die andere Hälfte unterhalb des Fotodetektor-Arrays 20 angeordnet sind.

Die hier gezeigte Ausführungsform zeigt ein Fotodetektor-Array 20 mit insgesamt 258 Spalten 24, die jeweils 80 Fotodetektoren 22 umfassen.

Die ungeradzahligen Spalten 24 sind mit Multiplexern 40 oberhalb des Arrays verbunden. Die geradzahligen Spalten 24 des Fotodetektor-Arrays 20 sind mit geradzahligen Multiplexern 40 unterhalb des Arrays verbunden.

In der hier gezeigten Ausführungsform sind insgesamt vier Empfänger-Schaltungen 30 mehr vorgesehen als Spalten 24. Es gibt folglich in der Gruppe der ungeradzahligen Empfänger-Schaltungen 30 und der ungeradzahligen Multiplexer 40, die oberhalb des Fotodetektor-Arrays 20 angeordnet sind, zwei Empfänger-Schaltungen 30 mehr als Multiplexer 40 vorhanden sind. Beispielsweise wird die Spalte 24 mit der Nummer 259 mit einem Multiplexer 40 mit der Nummer 259 verbunden. Der 259. Multiplexer 40 ist wiederum mit drei Empfänger-Schaltungen 30 verbunden, nämlich mit denen, die die Nummer 257, 259 und 261 tragen. Standardmäßig ist der 259. Multiplexer mit der 259. Empfänger-Schaltung 30 verbunden. Das heißt, Signale, insbesondere Messsignale, von der 259. Spalte 24 von Fotodetektoren 22 werden an den 259. Multiplexer weitergeleitet und von hier aus zu der 259. Empfänger-Schaltung 30, wie in Figur 4 durch den durchgezogenen Pfeil dargestellt. Der 259. Multiplexer 40 kann jedoch das von der 259. Spalte 24 empfangene Messignal auch wahlweise an die 257. oder die 261. Empfänger-Schaltung 30 weiterleiten. Dies erfolgt beispielsweise dann, wenn die 259. Empfänger-Schaltung 30 in einem Test als defekt detektiert wurde. Hierbei kann ein von der Testschaltung 52 ausgeführter Test als Grundlage verwendet werden.

Für die geradzahligen Spalten 24, Multiplexer 40 und Empfänger-Schaltungen 30, die unterhalb des Fotodetektor-Arrays 20 angeordnet sind, gilt diese Beschaltung in analoger Weise.

Bei einem Ausfall der q-ten Empfänger-Schaltung 30, beispielsweise der Empfänger-Schaltung 30 mit der Nummer 259, wird der zugehörige q-te (259.) Multiplexer 40 die q-te Spalte 24 von Fotodetektor 22 mit einer anderen als der q-ten Empfänger-Schaltung 30 verbinden, nämlich mit der q-1-ten oder der q+1-ten Empfänger-Schaltung 30.

Vorzugsweise wird der q-te Multiplexer 40 mit der q-1-ten Empfänger-Schaltung 30 verschaltet, wenn der Defekt bei einer Empfänger-Schaltung 30 erfolgt, die in der ersten Hälfte der jeweiligen Gruppen von Empfänger-Schaltungen 30 angeordnet ist. Im Fall der ungeradzahligen Empfänger-Schaltung 30 wäre der Defekt der Empfänger-Schaltung 30 dann also innerhalb der 3. bis 129. Empfänger-Schaltung 30. Ist eine Empfänger-Schaltung 30 in der zweiten Hälfte der Gruppe von Empfänger-Schaltungen 30, also in der Hälfte der Empfänger-Schaltungen 30 mit den höheren, ungeraden Nummern detektiert, so wird ein q-ter Multiplexer 40 die q-te Spalte 24 mit dem q+1-ten Empfänger-Schaltung 30 verbinden.

Selbstverständlich ist es möglich, auch stets die Empfänger-Schaltung 30 mit der nächstkleineren Nummer oder stets mit der nächstgrößeren Nummer auszuwählen. Beispielsweise kann dies auch davon abhängig gemacht werden, ob in der ersten Hälfte von Empfänger-Schaltungen 30 schon eine defekte Empfänger-Schaltung 30 detektiert wurde oder nicht. Wird keine Empfänger-Schaltung 30 als Defekt erkannt, kann auch in der oberen Hälfte von Empfänger-Schaltungen 30 zunächst von einem Multiplexer 40 die nächstgrößere Empfänger-Schaltung 30 angesteuert werden.

Wird beim Erkennen einer defekten Empfänger-Schaltung 30 von der standardmäßigen Zuordnung von Multiplexern 40 zu Empfänger-Schaltungen 30 abgewichen, so sind gegebenenfalls auch die Zuordnungen aller anderen Multiplexer 40 zu entsprechenden Empfänger-Schaltungen 30 entsprechend zu ändern.

Wird beispielsweise die Empfänger-Schaltung 30 mit der Nummer 3 als defekt detektiert, wird die Zuordnung zwischen dem Multiplexer 40 mit der Nummer 3 zu der Empfänger-Schaltung 30 mit Nummer 3 aufgelöst. Vielmehr wird eine Verbindung zwischen dem Multiplexer 40 mit der Nummer 3 zu der Empfänger-Schaltung 30 mit Nummer 1 hergestellt. Alle anderen Zuordnungen zwischen Multiplexern 40 und Empfänger-Schaltungen 30 bleiben dann unberührt. Auch bei einem Defekt der vorletzten Empfänger-Schaltung 30, beispielsweise mit der Nummer 259, bleiben alle anderen Zuordnungen zwischen Multiplexern 40 und Empfänger-Schaltungen 30 unberührt. Wird jedoch beispielsweise die Empfänger-Schaltung 30 mit der Nummer 257 als defekt detektiert, stellt der Multiplexer 257 eine Verbindung mit der Empfänger-Schaltung 30 mit der Nummer 259 her. Der Multiplexer 40 mit der Nummer 259 muss entsprechend dann eine Zuordnung mit der Empfänger-Schaltung 30 mit der Nummer 261 herstellen.

Durch die geänderten Zuordnungen können also auch Lidar-Empfänger-Schaltungen 10 mit ein oder zwei defekten Empfänger-Schaltungen 30 verwendet und ausgeliefert werden. Die Anzahl der tolerierbaren, defekten Empfänger-Schaltungen 30 hängt von der Anzahl der Redundanz ab; mit anderen Worten davon, wieviele Empfänger-Schaltungen 30 es mehr gibt als Multiplexer 40.

In einer bevorzugten Ausführungsform wie in Figur 4 gezeigt, umfasst die Lidar-Empfänger-Schaltung 10 ein Schieberegister 12, das hier gestrichelt dargestellt ist. In dem Schieberegister 12 werden die Zuordnungen zwischen Multiplexern 40 und Empfänger-Schaltungen 30 abgespeichert. Hierbei sind zunächst die standardmäßigen Zuordnungen gespeichert. Im Falle eines Erkennens eines Defekts werden jedoch die geänderten und neuen Zuordnungen abgespeichert.

Es kann also zu einem Überschreiben der Werte im Schieberegister 12 kommen.

In Figur 4 ist zu erkennen, dass die Empfänger-Schaltungen 30 bevorzugt eine Time-to-digital-Conversion-Schaltung, TDC-Schaltung 32, umfassen. Die Empfänger-Schaltung 30 umfasst bevorzugt darüber hinaus eine Speichereinheit 34, die bevorzugt ein SRAM-Speicher ist. Zusätzlich oder alternativ kann die Empfänger-Schaltung 30 auch einen Histogrammspeicher umfassen, um optische Signale, die mit den Fotodetektoren 22 erfasst werden, zu histogrammieren, also zu sammeln, beispielsweise aufzuaddieren.

Die in Figur 4 gezeigte Ausführungsform hat den Vorteil, dass trotz Redundanz von Empfänger-Schaltungen 30 die Leitungslängen auch bei nicht standardmä-ßiger Verschaltung von Multiplexern 40 und Empfänger-Schaltungen 30 nahezu gleich bleiben. Eventuell auftretende Laufzeitunterschiede sind somit im praktischen System vernachlässigbar. Durch die massiv parallelisierte Struktur erfolgt also keine Verfälschung von Laufzeitmessungen. Dies ist eine Anforderung, die beispielsweise von Ansteuerblöcken mit asynchronen Zeitstempeln erfolgt, bei denen die Leitungen zu den redundanten SRAM-Blöcken (Empfänger-Schaltung 30) möglichst kurz gehalten werden müssen. Trotz redundanter Ausbildung der Lidar-Empfänger-Schaltung 10 sind die nominellen Verbindungen, also die standardmäßigen Verbindungen zwischen Fotodetektor 22 und Empfänger-Schaltung 30 für alle Kanäle im Layout gleich ausgelegt. Zusätzliche Empfänger-Schaltungen 30 an den äußeren Rändern der Reihe von Empfänger-Schaltungen 30 sind als redundante Empfänger-Schaltungen 30 vorgesehen. Die Anzahl der redundanten Blöcke kann beliebig ausgelegt sein.

Durch die Anordnung mit zwei Gruppen von Empfänger-Schaltungen 30 und Multiplexern 40, beispielsweise oberhalb und unterhalb des Fotodetektor-Arrays 20, wie in Figur 4 gezeigt, können zwei Teilsysteme vorgesehen sein, die jeweils zwei redundante Empfänger-Schaltungen 30 aufweisen. Dies sind im Teilsystem der geradzahligen Empfänger-Schaltungen 30 die Empfänger-Schaltungen 30 mit den Nummern 0 und 260, im Teilsystem beziehungsweise der Gruppe der ungeradzahligen Empfänger-Schaltungen 30 die Schaltungen mit den Nummern 1 und 261. Im Fall von zwei redundanten Empfänger-Schaltungen 30, das heißt zwei zusätzlichen, im Normalfall ungenutzten Empfänger-Schaltungen 30 pro Gruppe oder Teilsystem, werden dann 3:1-Multiplexer 40 zwischen den Spalten 24 und Fotodetektoren 22 und den Empfänger-Schaltungen 30 angesetzt. Der Multiplexer 40 kann also die direkt zugeordnete Empfänger-Schaltung 30 bzw. die rechten und linken Nachbarschaltungen ansprechen und Verbindungen zu ihnen herstellen.

Mit dieser Anordnung, wie beispielsweise in Figur 4 gezeigt, können in jeder der beiden Gruppe- bzw. Teilsysteme bis zu zwei defekte Empfänger-Schaltungen 30 pro Teilsystem ausgeblendet werden, indem die Multiplexer 40 entsprechend konfiguriert werden, sodass zwischen zwei defekten Blöcken die nominellen Empfänger-Schaltungen 30 (SRAM-Blöcke) den Fotodetektor-Spalten zugewiesen sind. Links des linken Blocks sind alle linken Nachbarn der nominellen Empfänger-Schaltung 30 und rechts der rechten defekten Empfänger-Schaltung 30 alle rechten Nachbarn der nominellen Empfänger-Schaltung 30 den Fotodetektor-Spalten zugewiesen. Auf diese Weise werden bei Defekten nicht die defekten Blöcke bzw. Empfänger-Schaltungen 30 durch explizit redundante ersetzt, was zu deutlich unterschiedlichen Distanzen und Zuordnungen zu den Spalten 24 von Fotodetektoren 22 führen würden, sondern eine Vielzahl von funktionalen und funktionierenden Empfänger-Schaltungen 30 (SRAM-Blöcken) in ihrer Zuweisung verschoben.

Hierdurch wird gewährleistet, dass der Unterschied in der Distanz der Verbindungen oder Leitungen zwischen einer Spalte 24 von Fotodetektoren 22 und der Empfänger-Schaltung 30, insbesondere der Speichereinheit 34, vernachlässigbar ist und die Distanzen nicht größer sind als die anderen Distanzen zu anderen Empfänger-Schaltungen 30. Dies ist insbesondere bei der Verwendung von Zeitstempeln wichtig. Das Multiplexen vor der synchronen SRAM-Ansteuerung der Speichereinheit 34 hat den großen Vorteil, dass das Interface hier nur aus zwei Signalen pro Spalte 24 von Fotodetektoren 22 besteht, nämlich dem asynchronen Triggereingang und dem Reset der jeweiligen Spalte 24 am Ende jedes SRAM-Zugriffs, um die Totzeit aktiv zu beenden und sensitiv für das nächste optische Signal im Fotodetektor 22 bzw. in der entsprechenden Spalte 24 zu sein. SRAM-Ansteuerung der Empfänger-Schaltung 30 und Reset der Fotodetektoren 22 der jeweiligen Spalte 24 werden gemeinsam in einer Schaltung erzeugt.

Die Ausbeuteverluste bei der Herstellung mit der hier beschriebenen und in einer besonderen Ausführungsform in Figur 4 gezeigten Architektur werden massiv verbessert. Bei einer Anordnung gemäß Figur 4 und zwei redundanten Empfänger-Schaltungen 30 in den beiden Gruppen von Empfänger-Schaltung 30 (oberhalb und unterhalb des Fotodetektor-Arrays 20), führt zu einer deutlichen Erhöhung der Zuverlässigkeit des Systems.

Liegt die Wahrscheinlichkeit eines einzelnen Fehlers in der kompletten Lidar-Empfänger-Schaltung 10 bei p, so ist dies die Ausfallwahrscheinlichkeit für die komplette Schaltung. Die Herstellungsausbeute (Yield) ohne Redundanz ergibt sich dann zu v = 1 - p.

Die Ausfallwahrscheinlichkeit in einer Hälfte der Empfänger-Schaltungen 30 ohne Redundanz beträgt p/2. Die Ausfallwahrscheinlichkeit in einer Hälfte der Empfänger-Schaltungen 30 mit zweifacher Redundanz beträgt (p/2)³. Erst bei drei Fehlern gibt es einen Ausfall. Die Ausfallwahrscheinlichkeit für eine komplette Lidar-Empfänger-Schaltung 10 ist in diesem Fall mit 2 x 2-facher Redundanz, also gleich pᵣ =2 × (p/2)³

Daraus ergibt sich eine Herstellungsausbeute mit Redundanz von vᵣ = 1 - pᵣ = 1 - 2 × (p/2)³.

Bei der Annahme einer Ausfallwahrscheinlichkeit von 50 % ergibt sich also ohne Redundanz eine Herstellungsausbeute von 50 %, mit Redundanz jedoch eine Herstellungsausbeute von 97 %.

Eine Ausfallwahrscheinlichkeit gleich 10 % führt ohne Redundanz zu einer Herstellungsausbeute gleich 90 % und mit Redundanz zu einer Herstellungsausbeute gleich 99,975 %.

Auch für deutlich schlechtere Fehlerwahrscheinlichkeiten bleibt die Redundanz wirksam:
Eine Ausfallwahrscheinlichkeit p gleich 75 % führt ohne Redundanz zu einer Herstellungsausbeute gleich 25 %, mit Redundanz zu einer Herstellungsausbeute gleich 89,5 %.

Sollte die Fehlerwahrscheinlichkeit tatsächlich so hoch liegen, würde eine grö-βere Redundanz Abhilfe schaffen, z. B. vier redundante Empfänger-Schaltungen 30 pro Hälfte von Empfänger-Schaltungen 30 (also pro Gruppe (Teilsystem) von Empfänger-Schaltungen 30). In diesem Fall berechnet sich die Ausfallwahrscheinlichkeit zu pᵣ = 2 × (p/2)⁵; erst der fünfte Fehler führt zum Ausfall der ganzen Lidar-Empfänger-Schaltung 10.

Bei einer Fehlerwahrscheinlichkeit von 75 % ergibt sich dann ohne Redundanz eine Herstellungsausbeute von 25 % und mit 2 x 4-fach Redundanz eine Herstellungsausbeute von 98,5 %.

Somit ist die Redundanz ein probates Mittel, um die Ausbeuteverluste deutlich zu reduzieren. Mit der hier vorgeschlagenen Anordnung und Ausführungsform können auch bei ausgefallenen Empfänger-Schaltungen 30 die Verbindungswege zu den redundanten Empfänger-Schaltungen 30 nahezu gleich lang sein. Das bedeutet, die Verbindungswege zwischen den Fotodetektoren 22 und den Empfänger-Schaltungen 30 sind für alle Verbindungen derart gleich lang, dass sie in der Praxis keinerlei Auswirkungen haben und vernachlässigbar sind.

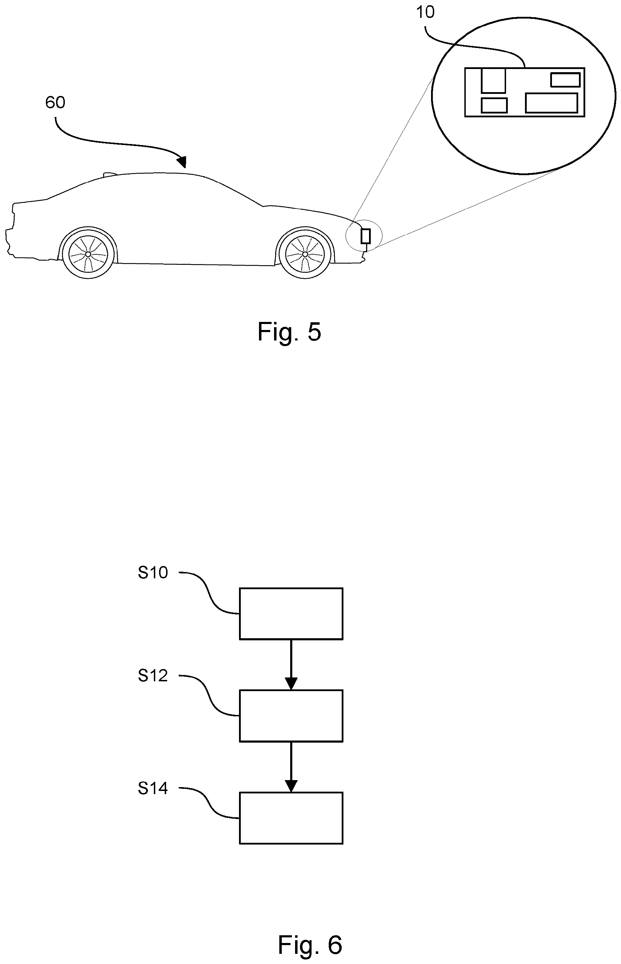

Figur 5 zeigt ein Fahrzeug 60 mit einem Lidar-System, das die erfindungsgemäße Lidar-Empfänger-Schaltung 10 gemäß Figur 1 oder gemäß Figur 4 umfasst.

Figur 6 zeigt schematisch einen Verfahrensablauf zur Reduzierung von Ausbeuteverlusten bei der Herstellung einer Lidar-Empfänger-Schaltung 10 zum Empfangen von optischen Signalen mittels der Fotodetektoren 22, um Ereignisse oder Objekte in der Umgebung der Lidar-Empfänger-Schaltung 10 zu erfassen. Die Lidar-Empfänger-Schaltung 10 ist bevorzugt nach einer der Ausführungsformen gemäß der Figuren 1 bis 4 ausgebildet. Das Verfahren stellt sicher, dass beim Vorhandensein einer Redundanz von Empfänger-Schaltungen 30 auch beim Ausfall einer vorgegebenen, akzeptablen Anzahl von Empfänger-Schaltungen 30 eine Lidar-Empfänger-Schaltung 10 hergestellt werden kann, die einwandfrei funktioniert und trotz Redundanz Verfälschungen bei Laufzeitmessungen, insbesondere bei zeitkritischen, asynchronen Zeitstempeln oder Zeitsignalen, ausschließt.

In einem ersten Schritt S10 des Herstellens einer standardmäßigen Zuordnung werden n Spalten 24 von Fotodetektoren 22 zu den i - x Empfänger-Schaltungen 30 mittels der m Multiplexer 40 zugeordnet. Dabei gilt, dass i - n = x ist, wobei i die Anzahl aller Empfänger-Schaltungen 30 ist, x die Anzahl der redundanten Empfänger-Schaltungen 30 und n die Anzahl der Spalten 24 von Fotodetektoren 22.

In einem weiteren Schritt S12 des Erkennens eines Defekts werden Defekte in einer Empfänger-Schaltung 30 erkannt, beispielsweise in einer q-ten Empfänger-Schaltung 30. Ein Schritt S14 des Zuordnens der aktuellen q-ten Spalte 24 von Fotodetektoren 22 zu einer anderen Empfänger-Schaltung 30 mittels des q-ten Multiplexers 40 schließt sich an. Beim Erkennen eines Defekts wird also die standardmäßige Zuordnung zwischen Spalten 24 von Fotodetektoren 22 und Empfänger-Schaltungen 30 aufgehoben, sodass die q-te Spalte 24 mittels des q-ten Multiplexers 40 einer anderen als der q-ten Empfänger-Schaltung 30 zugeordnet wird, also einer w-ten Empfänger-Schaltung 30, wobei gilt, dass q ungleich w ist. Vorzugsweise ist w = q ± 1.

Gemäß dem Verfahren wird bei einem Defekt einer ersten Empfänger-Schaltung 30 die erste bis q-te Spalte 24 von Fotodetektoren 22 der jeweils vorherigen Empfänger-Schaltung 30, also der q-1-ten Empfänger-Schaltung 30 zugeordnet. Somit erfolgt eine Zuordnung zu den benachbarten Empfänger-Schaltungen 30 im Fall eines ersten Defekts, also zu der vorherigen Empfänger-Schaltung 30, da die erste Empfänger-Schaltung 30 eine redundante Empfänger-Schaltung 30 ist und standardmäßig keiner Spalte 24 von Fotodetektor 22 zugeordnet ist.

Bevorzugt kann beim Erkennen eines zweiten Defekts einer Empfänger-Schaltung 30, also einer zweiten defekten Empfänger-Schaltung 30, die q-te bis n-te Spalte 24 von Fotodetektoren 22 der jeweils nachfolgenden, also der q+1-te Empfänger-Schaltung 30 zugeordnet werden. Somit erfolgt eine Zuordnung der q-ten Spalte 24 an die nächsthöhere Empfänger-Schaltung 30. Dies ist ohne weiteres möglich, da die letzte, also die i-te Empfänger-Schaltung 30 eine redundante Schaltung ist und standardmäßig in keiner Spalte 24 von Fotodetektoren 22 zugeordnet ist.

Die Erfindung wurde anhand der Zeichnungen und der Beschreibung umfassend beschrieben und erklärt.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Lidar-Empfänger-Schaltung zum Empfangen von optischen Signalen mittels Fotodetektoren (22), um Ereignisse oder Objekte in der Umgebung der Lidar-Empfänger-Schaltung (10) zu erfassen, mit einer Redundanz an Empfänger-Schaltungen (30) zur Reduzierung der Ausfallwahrscheinlichkeit, umfassend
ein Fotodetektor-Array (20) mit einer Vielzahl von Fotodetektoren (22) zum Empfangen optischer Signale und zum Ausgeben eines Messsignals, wobei die Fotodetektoren (22) als zweidimensionale Matrix in Form von Zeilen und n Spalten (24) angeordnet sind, mit der Anzahl von n grö-ßer 1;
eine Vielzahl von i Empfänger-Schaltungen (30) zum Empfangen des Messsignals der Fotodetektoren (22), mit der Anzahl i größer n;
eine Vielzahl von m Multiplexern (40), die elektrisch zwischen dem Fotodetektor-Array (20) und den Empfänger-Schaltungen (30) angeordnet sind und mit Fotodetektoren (22) und Empfänger-Schaltungen (30) verbunden sind, mit der Anzahl von m größer 1;
wobei
wenigstens einer der Multiplexer (40) mit einer Spalte (24) von Fotodetektoren (22) und mit wenigstens zwei Empfänger-Schaltungen (30) verbunden ist;
jede Empfänger-Schaltung (30) dazu ausgebildet ist, die Messsignale der Fotodetektoren (22) einer Spalte (24) zu empfangen und zu verarbeiten;
jeder Empfänger-Schaltung (30) standardmäßig eine Spalte (24) von Fotodetektoren (22) zugeordnet ist; und
der wenigstens eine Multiplexer (40) dazu eingerichtet ist, eine Spalte (24) von Fotodetektoren (22) mit einer anderen Empfänger-Schaltung (30) zu verbinden als mit der Empfänger-Schaltung (30), die standardmä-ßig der Spalte (24) von Fotodetektoren (22) zugeordnet ist,
wobei die Zuordnung beim Erkennen eines Defekts einer der Empfänger-Schaltungen (30) des zugehörigen Multiplexers (40) erfolgt.

2. Lidar-Empfänger-Schaltung nach Anspruch 1, **dadurch gekennzeichnet, dass** die Empfänger-Schaltungen (30) unabhängig voneinander sind und bevorzugt eine asynchrone Verarbeitung der Messsignale in den Empfänger-Schaltungen (30) erfolgt.

3. Lidar-Empfänger-Schaltung nach einem der vorhergehenden Ansprüche, **dadurch gekennzeichnet, dass** einer der Multiplexer (40) eine Spalte (24) von Fotodetektoren (22) mit einer anderen, als der standardmäßig zugeordneten Empfänger-Schaltung (30) verbindet, wenn bereits eine Verbindung der standardmäßig zugeordneten Empfänger-Schaltung mit einer anderen Spalte von Fotodetektoren (22) existiert.

4. Lidar-Empfänger-Schaltung nach einem der vorhergehenden Ansprüche, **dadurch gekennzeichnet, dass** beim Erkennen eines Defekts einer der Empfänger-Schaltungen (30) der zugehörige Multiplexer (40) die zugehörige Spalte (24) von Fotodetektoren (22) mit einer anderen Empfänger-Schaltung (30) verbindet, zu der noch keine Verbindung mit einer Spalte (24) von Fotodetektoren (22) besteht.

5. Lidar-Empfänger-Schaltung nach dem vorhergehenden Anspruch, **dadurch gekennzeichnet, dass** beim Erkennen eines ersten Defekts einer q-ten Empfänger-Schaltung (30) der zugehörige q-te Multiplexer (40) die q-te Spalte (24) von Fotodetektoren (22) mit der um eins erniedrigten Empfänger-Schaltung (30) verbindet und alle ersten bis q-1-ten Multiplexer (40) die Zuordnung zwischen Spalte (24) und Empfänger-Schaltung (30) nach dem gleichen Prinzip ändern oder herstellen, bevorzugt für alle q kleiner oder gleich m/2, wobei q und r eine natürliche Zahl sind.

6. Lidar-Empfänger-Schaltung nach dem vorhergehenden Anspruch, **dadurch gekennzeichnet, dass** beim Erkennen eines zweiten Defekts einer q-ten Empfänger-Schaltung (30) der zugehörige q-te Multiplexer (40) die q-te Spalte (24) von Fotodetektoren (22) mit der um eins erhöhten Empfänger-Schaltung (30) verbindet und alle, bevorzugt in einer festen Reihenfolge angeordneten, q+1-ten bis m-ten Multiplexer (40) die um eins erhöhte r-te Empfänger-Schaltung (30) mit der r-1-ten Spalte (24) von Fotodetektoren (22) verbinden, bevorzugt für alle q größer oder gleich m/2, wobei q und r eine natürliche Zahl sind.

7. Lidar-Empfänger-Schaltung nach einem der vorhergehenden Ansprüche, **dadurch gekennzeichnet, dass** die Anzahl i der Empfänger-Schaltungen (30) größer als die Anzahl m der Multiplexer (40) ist, wobei bevorzugt i größer oder gleich m + 2 ist, besonders bevorzugt i größer oder gleich m + 3 ist.

8. Lidar-Empfänger-Schaltung nach einem der vorhergehenden Ansprüche, **dadurch gekennzeichnet, dass** der Multiplexer (40) ein 1 zu x Multiplexer (40) ist und eine Spalte (24) von Fotodetektoren (22) mit x Empfänger-Schaltungen (30) verbinden kann, wobei x-1 gleich der Differenz der Anzahl i von Empfänger-Schaltungen (30) zu der Anzahl n von Spalten (24) ist, bevorzugt x gleich 5 ist, besonders bevorzugt x gleich 3 ist.

9. Lidar-Empfänger-Schaltung nach einem der vorhergehenden Ansprüche, **dadurch gekennzeichnet, dass** die Anzahl m der Multiplexer (40) gleich der Anzahl n der Spalten (24) der Fotodetektoren(22) ist.

10. Lidar-Empfänger-Schaltung nach einem der vorhergehenden Ansprüche, **dadurch gekennzeichnet, dass** die Empfänger-Schaltung (30) eine TDC-Schaltung (32) umfasst.

11. Lidar-Empfänger-Schaltung nach einem der vorhergehenden Ansprüche, **dadurch gekennzeichnet, dass** die Empfänger-Schaltung (30) eine Speichereinheit (34), bevorzugt einen SRAM-Speicher, umfasst und/oder einen Histogrammspeicher umfasst.

12. Lidar-Empfänger-Schaltung nach einem der vorhergehenden Ansprüche, **dadurch gekennzeichnet, dass** die Fotodetektoren (22) eine Fotodiode (26), bevorzugt eine Avalanche-Diode, besonders bevorzugt eine Single Photon Avalanche Diode, und eine Ausleseschaltung (28) umfassen.

13. Lidar-Empfänger-Schaltung nach einem der vorhergehenden Ansprüche, umfassend ein Schieberegister (12), **dadurch gekennzeichnet, dass** in dem Schieberegister (12) die Einstellungen der Multiplexer (40) gespeichert sind, bevorzugt die standardmäßige Zuordnung einer Spalte (24) von Fotodetektoren (22) zu einer Empfänger-Schaltung (30), besonders bevorzugt zusätzlich oder alternativ die aktuelle Zuordnung von Spalten (24) von Fotodetektoren (22) zu Empfänger-Schaltungen (30).

14. Lidar-Empfänger-System mit einer Lidar-Empfänger-Schaltung nach einem der vorhergehenden Ansprüche und mit einer Testschaltung (52), wobei die Testschaltung (52) dazu ausgebildet ist, alle Empfänger-Schaltungen (30) anzusprechen und einen vorbestimmten Test auszuführen, um einen Defekt einer Empfänger-Schaltung (30) zu erkennen.

15. Lidar-Empfänger-System nach dem vorhergehenden Anspruch, umfassend eine Lichtquelle (54) zum Aussenden von optischer Strahlung im sichtbaren oder nicht-sichtbaren Bereich, die von den Fotodetektoren (22) detektiert werden kann, **dadurch gekennzeichnet, dass** die von einem Objekt in der Umgebung oder Nähe des Lidar-Empfänger-Systems (50) reflektierte Strahlung von wenigstens einem der Fotodetektoren (22) des Fotodetektor-Array (20) detektiert und in wenigstens einer der Empfänger-Schaltungen (30) verarbeitet wird.

16. Verfahren zum Bypassen einer defekten Empfänger-Schaltung (30) einer Lidar-Empfänger-Schaltung (10), nach einem der vorhergehenden Ansprüche, zum Empfangen von optischen Signalen mittels Fotodetektoren (22), um Ereignisse oder Objekte in der Umgebung der Lidar-Empfänger-Schaltung (10) zu erfassen, umfassend die folgenden Schritte:
- Herstellen einer standardmäßigen Zuordnung der n Spalten (24) von Fotodetektoren (22) zu den i-x Empfänger-Schaltungen (30) mittels der m Multiplexer (40), wobei i - n = x gilt;
- Erkennen eines Defekts einer q-ten Empfänger-Schaltung (30);
- Zuordnen der aktuellen q-ten Spalte (24) von Fotodetektoren (22) einer anderen Empfänger-Schaltung (30) mittels des q-ten Multiplexers (40);
- wobei bei einem ersten Defekt einer ersten Empfänger-Schaltung (30) die erste bis q-te Spalte (24) von Fotodetektoren (22) der jeweils vorherigen Empfänger-Schaltung (30) zugeordnet ist.

17. Verfahren nach dem vorhergehenden Anspruch, **dadurch gekennzeichnet, dass** bei einem zweiten Defekt einer zweiten Empfänger-Schaltung (30) die q-te bis n-te Spalte (24) von Fotodetektoren (22) der jeweils nachfolgenden Empfänger-Schaltung (30) zugeordnet ist.

## Claims

1. A lidar receiver circuit for receiving optical signals by means of photodetectors (22), in order to detect events or objects in the surrounding area of the lidar receiver circuit (10), with a redundancy of receiver circuits (30) for reducing the failure probability, comprising
a photodetector array (20) with a plurality of photodetectors (22) for receiving optical signals and for outputting a measurement signal, wherein the photodetectors (22) are arranged as a two-dimensional matrix in the form of rows and n columns (24), with the number of n larger than 1;
a plurality of i receiver circuits (30) for receiving the measurement signal of the photodetectors (22), with the number i larger than n;
a plurality of m multiplexers (40), which are electrically arranged between the photodetector array (20) and the receiver circuits (30) and which are connected to photodetectors (22) and receiver circuits (30), with the number of m larger than 1;
wherein
at least one of the multiplexers (40) is connected to a column (24) of photodetectors (22) and to at least two receiver circuits (30);
each receiver circuit (30) is configured to receive and to process the measurement signals of the photodetectors (22) of a column (24);
a column (24) of photodetectors (22) is assigned to each receiver circuit (30) by default; and
the at least one multiplexer (40) is configured to connect a column (24) of photodetectors (22) to a receiver circuit (30) other than the receiver circuit (30), which is assigned to the column (24) of photodetectors (22) by default;
wherein the assignment takes place when a defect in one of the receiver circuits (30) of the associated multiplexer (40) is detected.

2. The lidar receiver circuit according to claim 1, **characterized in that** the receiver circuits (30) are independent of one another and preferably an asynchronous processing of the measurement signals takes place in the receiver circuits (30).

3. The lidar receiver circuit according to any one of the preceding claims, **characterized in that** one of the multiplexers (40) connects a column (24) of photodetectors (22) to a receiver circuit other than the default receiver circuit (30) if a connection of the default receiver circuit to another column of photodetectors (22) already exists.

4. The lidar receiver circuit according to any one of the preceding claims, **characterized in that** when detecting a defect of one of the receiver circuits (30), the corresponding multiplexer (40) connects the corresponding column (24) of photodetectors (22) to another receiver circuit (30) to which a connection to a column (24) of photodetectors (22) does not yet exist.

5. The lidar receiver circuit according to the preceding claim, **characterized in that** when detecting a defect of a q-th receiver circuit (30), the corresponding q-th multiplexer (40) connects the q-th column (24) of photodetectors (22) to the receiver circuit (30), which was decreased by one, and all first to q-1-th multiplexers (40) change or establish the assignment between column (24) and receiver circuit (30) according to the same principle, preferably for all q less than or equal to m/2, wherein q and r are a natural number.

6. The lidar receiver circuit according to the preceding claim, **characterized in that** when detecting a second defect of a q-th receiver circuit (30), the corresponding q-th multiplexer (40) connects the q-th column (24) of photodetectors (22) to the receiver circuit (30), which was increased by one, and all q+1-th to m-th multiplexers (40), which are preferably arranged in a fixed order, connect the r-th receiver circuit (30), which was increased by one, to the r-1-th column (24) of photodetectors (22), preferably for all q larger than or equal to m/2, wherein q and r are a natural number.

7. The lidar receiver circuit according to any one of the preceding claims, **characterized in that** the number p of receiver circuits (30) is larger than the number m of multiplexers (40), wherein i is preferably larger than or equal to m + 2, particularly preferably i is larger than or equal to m + 3.

8. The lidar receiver circuit according to any one of the preceding claims, **characterized in that** the multiplexer (40) is a 1 to x multiplexer (40) and can connect a column (24) of photodetectors (22) to x receiver circuits (30), wherein x-1 is equal to the difference of the number i of receiver circuits (30) to the number n of columns, preferably x is equal to 5, particularly preferably x is equal to 3.

9. The lidar receiver circuit according to any one of the preceding claims, **characterized in that** the number m of multiplexers (40) is equal to the number n of columns (24) of the photodetectors (22).

10. The lidar receiver circuit according to any one of the preceding claims, **characterized in that** the receiver circuit (30) comprises a TDC circuit (32).

11. The lidar receiver circuit according to any one of the preceding claims, **characterized in that** the receiver circuit (30) comprises a memory unit (34), preferably a SRAM memory, and/or comprises a histogram memory.

12. The lidar receiver circuit according to any one of the preceding claims, **characterized in that** the photodetectors (22) comprise a photodiode (26), preferably an avalanche diode, particularly preferably a single photon avalanche diode, and a readout circuit (28).

13. The lidar receiver circuit according to any one of the preceding claims, comprising a shift register (12), **characterized in that** the settings of the multiplexers (40) are stored in the shift register (12), preferably the default assignment of a column (24) of photodetectors (22) to a receiver circuit (30), particularly preferably additionally or alternatively the current assignment of columns (24) of photodetectors (22) to receiver circuits (30).

14. A lidar receiver system comprising a lidar receiver circuit according to any one of the preceding claims and comprising a test circuit (52), wherein the test circuit (52) is configured to address all receiver circuits (30) and to perform a predetermined test, in order to detect a defect of a receiver circuit.

15. The lidar receiver system according to the preceding claim, comprising a light source (54) for emitting optical radiation in the visible or non-visible range, which can be detected by the photodetectors (22), **characterized in that** the radiation, which is reflected by an object in the surrounding area or vicinity of the lidar receiver system (50), is detected by at least one of the photodetectors (22) of the photodetector array (20) and is processed in at least one of the receiver circuits (30).

16. A method for bypassing a defective receiver circuit (30) of a lidar receiver circuit according to any one of the preceding claims, for receiving optical signals by means of photodetectors, in order to detect events or objects in the surrounding area of the lidar receiver circuit, comprising the following steps:
- establishing a default assignment of the n columns (24) of photodetectors (22) to the i-x receiver circuits (30) using the m multiplexers (40), wherein i - n = x applies;
- detecting a defect of a q-th receiver circuit (30);
- assigning the current q-th column (24) of photodetectors (22) to another receiver circuit (30) by means of the q-th multiplexer (40);
- wherein, in the case of a first defect of a first receiver circuit (30), the first to q-th column (24) of photodetectors (22) is assigned to the respective previous receiver circuit (30).

17. The method according to the preceding claim, **characterized in that** in the case of a second defect of a second receiver circuit (30), the q-th to n-th column (24) of photodetectors (22) is assigned to the respective following receiver circuit (30).

## Revendications

1. Circuit récepteur lidar pour recevoir des signaux optiques à l'aide de photodétecteurs (22) afin de détecter des événements ou des objets à proximité du circuit récepteur lidar (10), avec une redondance des circuits récepteurs (30) pour réduire la probabilité de panne, comprenant
un réseau de photodétecteurs (20) avec une pluralité de photodétecteurs (22) pour recevoir des signaux optiques et pour délivrer un signal de mesure, dans lequel les photodétecteurs (22) sont disposés sous forme d'une matrice bidimensionnelle sous forme de lignes et de n colonnes (24), avec le nombre de n supérieur à 1 ;
une pluralité de i circuits récepteurs (30) pour recevoir le signal de mesure provenant des photodétecteurs (22), le nombre i étant supérieur à n ;
une pluralité de m multiplexeurs (40), qui sont disposés électriquement entre le réseau de photodétecteurs (20) et les circuits récepteurs (30) et sont connectés aux photodétecteurs (22) et aux circuits récepteurs (30), le nombre de m étant supérieur 1;
dans lequel
au moins un des multiplexeurs (40) est connecté à une colonne (24) de photodétecteurs (22) et à au moins deux circuits récepteurs (30) ;
chaque circuit récepteur (30) est conçu pour recevoir et traiter les signaux de mesure issus des photodétecteurs (22) d'une colonne (24) ;
à chaque circuit récepteur (30) est attribuée par défaut une colonne (24) de photodétecteurs (22) ; et
le au moins un multiplexeur (40) est conçu pour connecter une colonne (24) de photodétecteurs (22) à un circuit récepteur (30) autre que le circuit récepteur (30), qui est attribué par défaut à la colonne (24) de photodétecteurs (22),
dans lequel l'attribution se produit lorsqu'un défaut dans un des circuits récepteurs (30) du multiplexeur associé (40) est détecté.

2. Circuit récepteur Lidar selon la revendication 1, **caractérisé en ce que** les circuits récepteurs (30) sont indépendants les uns des autres et les signaux de mesure sont de préférence traités de manière asynchrone dans les circuits récepteurs (30).

3. Circuit récepteur Lidar selon une des revendications précédentes, **caractérisé en ce que** un des multiplexeurs (40) connecte une colonne (24) de photodétecteurs (22) à un circuit récepteur (30) autre que le circuit récepteur (30) standardisé, s'il existe déjà une connexion du circuit récepteur attribué par défaut à une autre colonne de photodétecteurs (22).

4. Circuit récepteur Lidar selon une des revendications précédentes, **caractérisé en ce que** lorsqu'un défaut dans un des circuits récepteurs (30) est détecté, le multiplexeur (40) associé connecte la colonne (24) de photodétecteurs (22) associée à un autre circuit récepteur (30), auquel encore aucune connexion à une colonne (24) de photodétecteurs (22) ne se produit.

5. Circuit récepteur Lidar selon la revendication précédente, **caractérisé en ce que** lorsqu'un premier défaut dans un q-ème circuit récepteur (30) est détecté, le q-ème multiplexeur (40) associé connecte la q-ème colonne (24) de photodétecteurs (22) au circuit récepteur (30) diminué d'un et tous les premiers à q-1ème multiplexeurs (40) changent ou établissent l'attribution entre colonne (24) et circuit récepteur (30) selon le même principe, de préférence pour tous q inférieur ou égal à m /2, dans lequel q et r sont un nombre naturel.

6. Circuit récepteur Lidar selon la revendication précédente, **caractérisé en ce que** lorsqu'un deuxième défaut dans un q-ème circuit récepteur (30) est détecté, le q-ème multiplexeur (40) associé connecte la q-ème colonne (24) de photodétecteurs (22) au circuit récepteur (30) augmenté d'un et tous les q+1ème au m-ème multiplexeurs (40), disposés de préférence dans un ordre fixe, connectent le r-ème circuit récepteur (30) augmenté d'un à la r-1ème colonne (24) de photodétecteurs (22) , de préférence pour tout q supérieur ou égal à m/2, dans lequel q et r sont un nombre naturel.

7. Circuit récepteur Lidar selon une des revendications précédentes, **caractérisé en ce que** le nombre i de circuits récepteurs (30) est supérieur au nombre m de multiplexeurs (40), dans lequel de préférence i est supérieur ou égal à m + 2, de manière particulièrement préférée i est supérieur ou égal à m + 3.

8. Circuit récepteur Lidar selon une des revendications précédentes, **caractérisé en ce que** le multiplexeur (40) est un multiplexeur 1 vers x (40) et peut connecter une colonne (24) de photodétecteurs (22) à x circuits récepteurs (30), dans lequel x-1 est égal à la différence entre le nombre i de circuits récepteurs (30) et le nombre n de colonnes (24), de préférence x est égal à 5, de manière particulièrement préférée x est égal à 3.

9. Circuit récepteur Lidar selon une des revendications précédentes, **caractérisé en ce que** le nombre m de multiplexeurs (40) est égal au nombre n de colonnes (24) de photodétecteurs (22).

10. Circuit récepteur Lidar selon une des revendications précédentes, **caractérisé en ce que** le circuit récepteur (30) comprend un circuit TDC (32).

11. Circuit récepteur Lidar selon une des revendications précédentes, **caractérisé en ce que** le circuit récepteur (30) comprend une unité de mémoire (34), de préférence une mémoire SRAM, et/ou comprend une mémoire d'histogramme.

12. Circuit récepteur Lidar selon une des revendications précédentes, **caractérisé en ce que** les photodétecteurs (22) comprennent une photodiode (26), de préférence une diode à avalanche, de manière particulièrement préférée une diode à avalanche à photon unique, et un circuit de lecture (28).

13. Circuit récepteur Lidar selon une des revendications précédentes, comprenant un registre à décalage (12), **caractérisé en ce que** les réglages des multiplexeurs (40) sont mémorisés dans le registre à décalage (12), de préférence l'attribution standard d'une colonne (24) de photodétecteurs (22) à un circuit récepteur (30), de manière particulièrement préférable, en plus ou en alternative, l'attribution actuelle des colonnes (24) de photodétecteurs (22) à des circuits récepteurs (30).

14. Système récepteur Lidar comportant un circuit récepteur lidar selon une des revendications précédentes et comportant un circuit de test (52), dans lequel le circuit de test (52) est conçu pour adresser tous les circuits récepteurs (30) et pour effectuer un test prédéterminé pour détecter un défaut dans un circuit récepteur (30).

15. Système récepteur Lidar selon la revendication précédente, comprenant une source lumineuse (54) pour émettre un rayonnement optique dans le domaine visible ou non visible, qui est détectable par les photodétecteurs (22), **caractérisé en ce que** le rayonnement émis par un objet dans le rayonnement réfléchi à proximité du système récepteur lidar (50) est détecté par au moins un des photodétecteurs (22) du réseau de photodétecteurs (20) et traité dans au moins un des circuits récepteurs (30).

16. Procédé pour contourner un circuit récepteur défectueux (30) d'un circuit récepteur lidar (10), selon une des revendications précédentes, pour recevoir des signaux optiques au moyen de photodétecteurs (22), pour détecter des événements ou des objets à proximité du circuit récepteur lidar (10), comprenant les étapes suivantes consistant à:
- établir une attribution standard des n colonnes (24) de photodétecteurs (22) aux i-x circuits récepteurs (30) au moyen des m multiplexeurs (40), dans lequel i - n = x s'applique;
- détecter un défaut dans un q-ème circuit récepteur (30);
- attribuer la q-ème colonne actuelle (24) de photodétecteurs (22) à un autre circuit récepteur (30) à l'aide du q-ème multiplexeur (40);
- dans lequel, en cas de premier défaut dans un premier circuit récepteur (30), la première à la q-ème colonne (24) de photodétecteurs (22) sont attribuées au circuit récepteur précédent (30).

17. Procédé selon la revendication précédente, **caractérisé en ce qu'**en cas de deuxième défaut dans un deuxième circuit récepteur (30), les q-ème à n-ème colonnes (24) de photodétecteurs (22) sont affectées au circuit récepteur (30) suivant correspondant.
